# EUROPEAN PATENT APPLICATION

(11) **EP 1 174 292 A2**
(43) Date of publication of application: **23.01.2002**
(21) Application number: 01200859.5
(22) Date of filing: 07.03.2001
(51) Int. Cl.: B60C 27/10

(54) **Improved tensioning device for snow chains and snow chain using the same**

(30) Priority: 18.07.2000 IT MI001629
(71) Applicant: MAGGI CATENE S.p.A., 22057 Olginate (Lecco) (IT)
(72) Inventor: Maggi, Corrado, 23896 Sirtori (Lecco) (IT); Pastorini, Cesare, 23874 Montevecchia (Lecco) (IT)
(74) Representative: Faggioni, Carlo Maria, Dr. Ing.

(57) **Abstract**

The present invention relates to a self-tensioning device for snow chains, comprising a housing body (1) and an elastic recall element (2), said housing body having a channel containing said elastic element and a coupling body which can be engaged with a continuous portion of said snow chain.

## Description

The present invention relates to a tensioning device for snow chains. In particular, it relates to a self-tensioning device provided with a housing body to which an elastic recall element is fixed.

As is known, in snow chains used in the past, the main problems experienced by motorists related to tensioning of the chain on the tyre. In fact, the chain would be closed around tyre, by fastening its two ends, and would then be provisionally tensioned by means of suitable retaining elements. It was then required to move the motor vehicle slightly, so as to cause the tyres to rotate through a few degrees, thereby allowing the fastening operation to be completed also for the chain portion which, during the first stage of assembly, was situated on the road surface. Finally, after travelling a short distance, it was required to stop again in order check the state of tensioning and take up any inevitable play resulting from adjustment in the position of the chain on the tyre.

Modern snow chains, however, in addition to being designed so as to allow rapid and simple assembly on the tyre, are provided with self-tensioning devices which avoid having to perform manually the operation of checking the tension and taking up the play.

A known device of this type is illustrated, for example, in Utility Model DE29703911U1. There is disclosed a device provided with a fastening cable which can be wound around a drum which interacts with a resilient recall element, in the form of a helical spring, and a disengageable locking ratchet mechanism. Due its constructional complexity, this device is fairly delicate, is subject to jamming and is costly to produce. Moreover, in order to limit the overall dimensions of the device, this constructional form envisages a fairly short maximum travel of the fastening cable: therefore, it is required to mount at least two of these devices for each snow chain, with consequent doubling of the manufacturing costs.

EP 1,024,035 discloses another self-tensioning device, in which the elastic element consists of the same fastening cable which is in the form of an elastic rope contained in the rest condition inside a labyrinth-type path formed in a rigid box attached to two ends of the chain.

A device which is very similar to that described in EP 1,024,035, but simpler, is also illustrated in IT 1,119,364.

All these devices of the prior art, however, since they are attached to the links of two ends of the chain, form an actual structural element of the said chain. Therefore, they are necessarily made of rigid and strong material and in any case must be designed taking into account particular structural requirements so as not to adversely affect the operation, strength and duration of the snow chain as a whole. As may be understood, the cost of these devices is further increased as a result of that stated above.

Finally, since the chain sizes are fairly variable, in order to ensure optimum operation for each of them, it would be necessary to manufacture at least two or three different sizes of the same device, which would have to be stored in a warehouse so as to be available at the appropriate time. This involves a doubling or tripling of the number of articles to be manufactured and, consequently, an increase in the production and storage costs.

The object of the present invention is to provide a self-tensioning device which is extremely simple and low-cost and which may be manufactured in various sizes without necessarily having to keep numerous articles in storage.

These objects are achieved with a device, the essential and fundamental features of which are described in Claim 1, and by a snow chain as described in Claim 9.

Further characteristic features and advantages of the device according to the invention will emerge, however, more clearly from the detailed description which follows of a preferred embodiment thereof, provided by way of example and illustrated in the accompanying drawings, in which:

Fig. 1 is a partially transparent, side elevation view of a first preferred embodiment of the housing body of the device according to the invention;

Fig. 2 is a perspective view of a second embodiment of the device according to the invention, in which the elastic recall element is also illustrated;

Fig. 3 is a side elevation view of the device according to Fig. 1 mounted in position;

Fig. 4 is a partial perspective view of the rear portion of the housing body according to Fig. 1;

Fig. 5 is a partial perspective view of the front portion of the device according to Fig. 1 mounted in position;

Fig. 6 is a side elevation view of a snow chain according to the invention mounted on a tyre;

Fig. 7 is a view which is similar to that of Fig. 6 and in which a third embodiment of the housing body according to the invention is shown; and

Fig. 8 is a view similar to that of Fig. 6 which illustrates a fourth embodiment of the invention.

A self-tensioning device comprises, in a manner known per se, an elastic element 2 fastened, on one side, to a housing body 1 and, on the other side, to a chain section T to be tensioned, passing inside a non-return block C.

According to the invention, the housing body 1 comprises a housing channel 3 containing the elastic element 2 and a coupling body 4 for fixing to a snow chain.

The coupling body is also in tubular form so as to be able to receive inside it the chain section with which it is engaged.

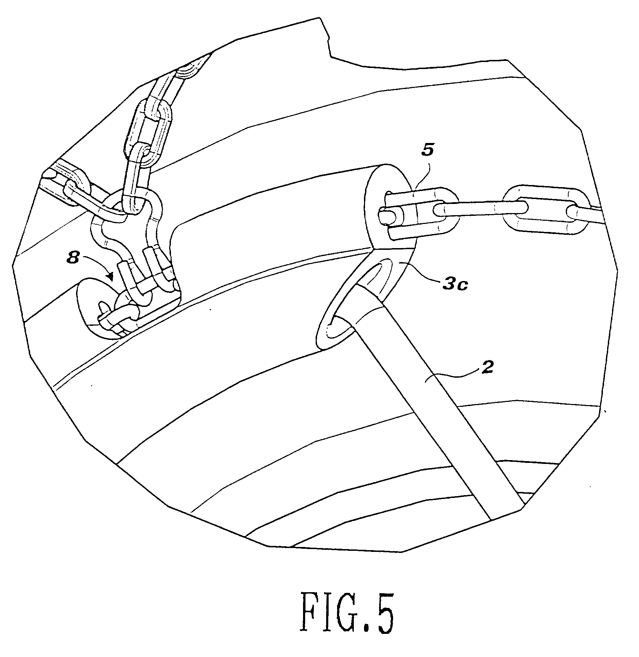

According to a preferred embodiment, the coupling body 4 comprises a channel with a cross-shaped section 4a (Fig. 4) inside which links 5 of the chain, perpendicular to each other, may be housed.

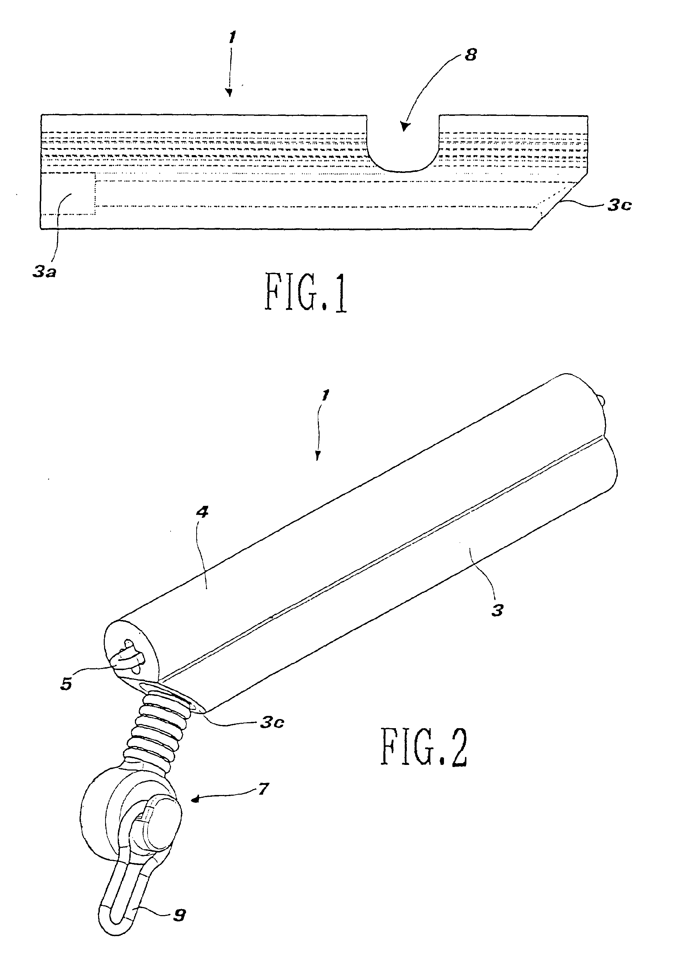

The housing channel 3 has, at a rear end, a recess 3a with a shoulder 3b (Fig. 4) and, at the front end, a chamfered surface 3c formed at an angle of about 45° (Fig. 1).

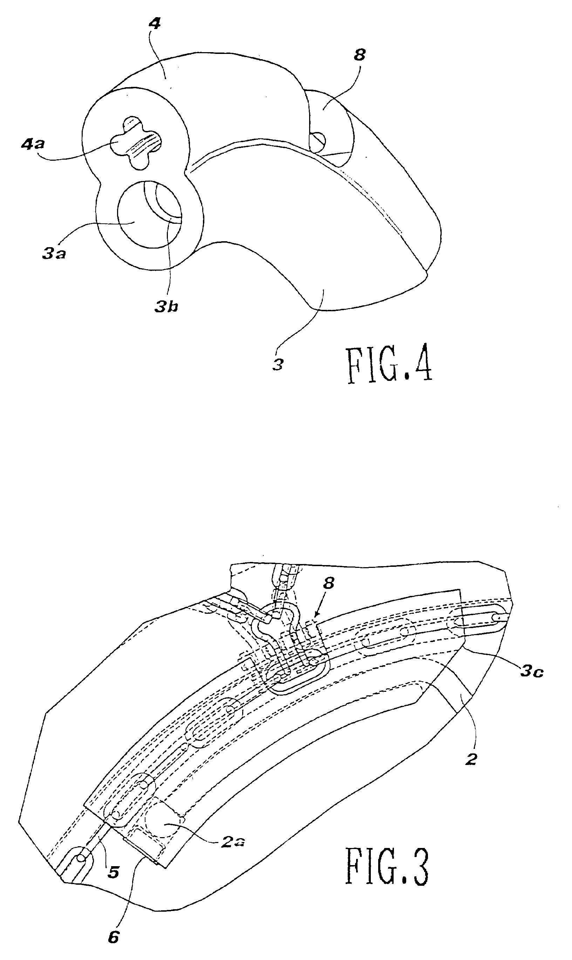

The elastic element 2, which is of suitable length (depending on its elastic modulus and the distance between the device itself and the point of fastening to the chain T), is preferably a rubber cord and is inserted inside the channel 3. It has an enlarged portion 2a (such as a knot, a metal clip, etc.) which is seated in the recess 3a and bears against the shoulder 3b, so as not to allow extraction thereof from the housing body 1 during use. The recess 3a, once the elastic element has been inserted, may be closed by a finishing cap 6 (Fig. 3).

At the opposite end, the rubber cord has a fastening means 7 - for example in the form of a hollow button, from which a hook projects and inside which the end of the cord 2 is fixed in a known manner - the purpose of which will be illustrated further below.

According to a preferred embodiment, the coupling body has at least one notch 8 which interrupts its continuity in a portion thereof. In this way it is possible to expose a section of chain which passes through it and onto which one or more links of transverse chain portions (Figs. 3, 5 and 6) are secured.

This specific solution is particularly advantageous for keeping the device according to the invention in a fixed position longitudinally on the chain. Moreover, during operation, the device is retained better also transversely, so as to provide better results from a functional and aesthetic point of view,

Advantageously, owing to the extreme simplicity of the design, the housing body 1 may be made by means of extrusion of a plastic material (for example plasticized PVC). In this way it is sufficient to keep in stock a single article, consisting of a long, double tubular, extruded element which will then be cut to the appropriate length depending on requirements. Following cutting to the desired size, the two front and rear ends of the housing channel 3 and the coupling body 4 may be formed by means of ordinary machining with machine-tools.

For assembly of the device, it is sufficient to insert a section of chain inside the channel with the cross-shaped section 4 and then finish assembling the snow chain with the associated connection elements, if necessary also fastening the transverse portion in the region of the notch 8.

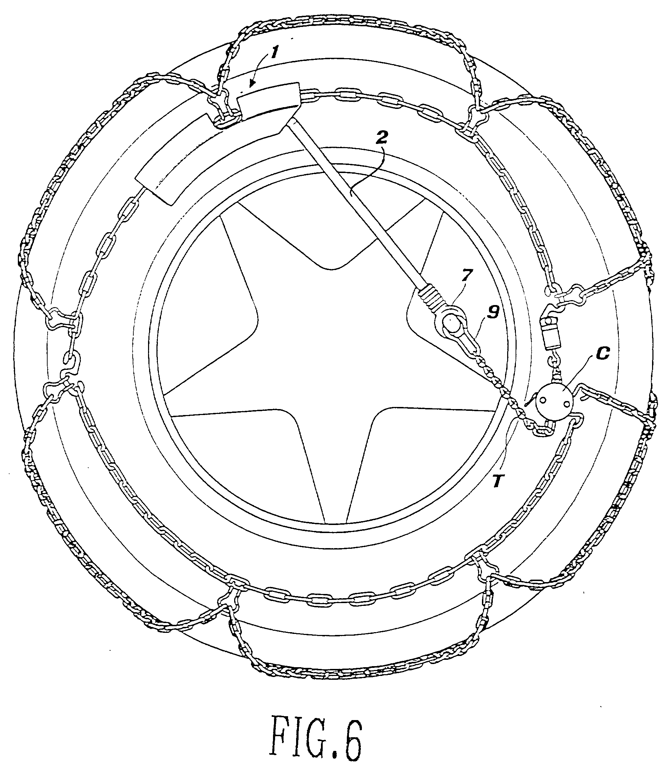

Once the snow chain has been assembled, according to these first embodiments, the elastic element 2 in the rest condition remains entirely inside the housing body 1. During use, after mounting the chain onto the tyre, the rubber cord is stretched manually by the operator, who extracts it from the housing channel and fastens it by means of the hook 7 to an eyelet-type link 9 of the tensioning chain section T passing inside the non-return block C (Fig. 6).

By so doing, once the motor vehicle starts to move again, the elastic force exerted by the elastic cord 2 automatically acts so as to recall the tensioning chain section T, recovering the play which arises as the snow chain positions itself on the tyre. The non-return block C then prevents the tensioning chain section T from being able to slip backwards, opening the chain again.

According to a preferred arrangement of the snow chain according to the invention, the tensioning device is fixed to the chain in a position substantially opposite - i.e. on a non-adjacent side - to the position in which the non-return block C is located, as can be seen in Fig. 6. In this case, the elastic element 2, emerging from the housing body 1 forms, together with the longitudinal axis of the latter, an angle close to 60° - being carefully guided, so as to prevent any undesirable wear, by the receiving surface of the chamfer 3c - so that it can be fastened to the tensioning section T of the chain.

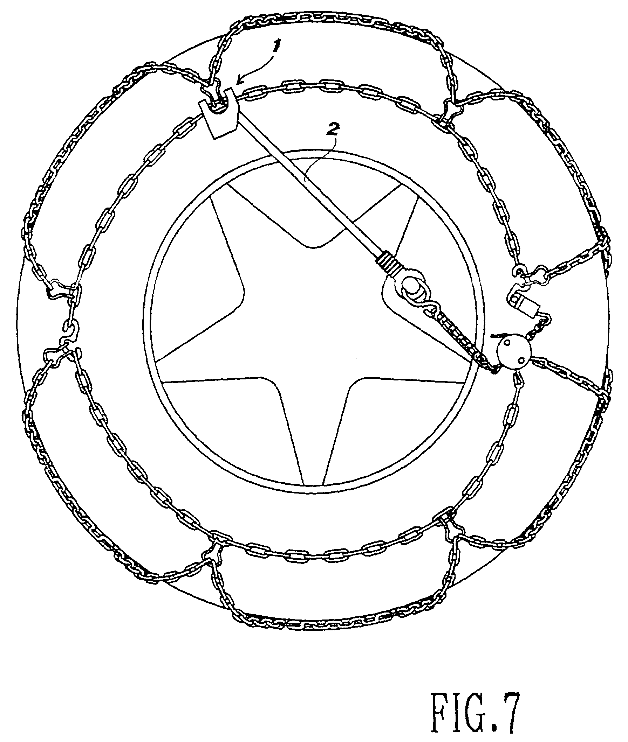

In the embodiment according to Fig. 7, the housing body 1 is very short such that it has exclusively a fastening function for the elastic element 2. Preferably, the short body 1 consists of the version with the notch 8 so that it may be mounted astride of a transverse link of the chain.

In this case, there is the further advantage of an extremely low manufacturing cost since the material used for the body 1 consists of a very small quantity.

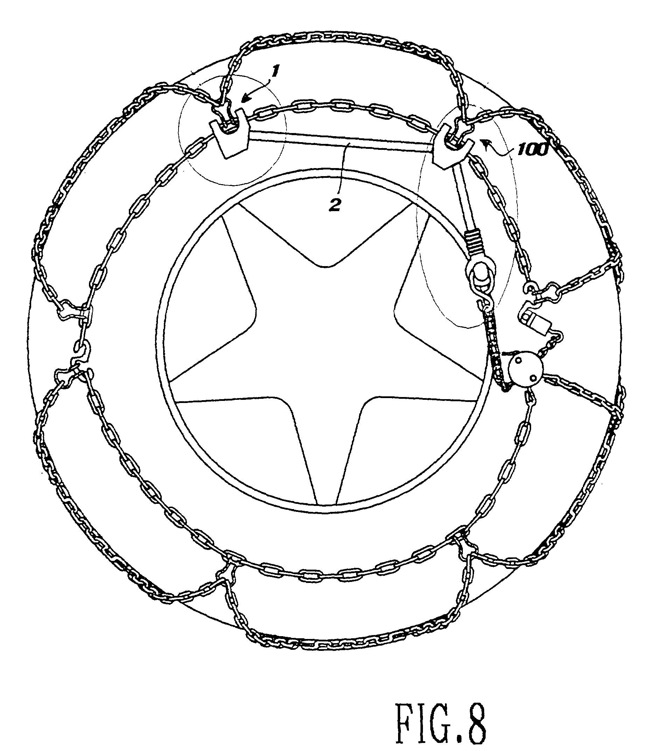

Finally, in the embodiment illustrated in Fig. 8, the basic extruded element is used to create an additional transmission block 100 mounted on a chain section adjacent to that on which the block 1 is fixed. In this case, it is possible to regard the housing body 1 as divided into two different and separate sections.

Advantageously, it is possible to form a longitudinal notch in the housing channel of the body 100: this would allow the elastic cord 2 to be engaged with and disengaged from the transmission body 100 only when required.

As can be understood, the objects expressed in the introductory statements have been fully achieved.

In fact, the device according to the invention may be mounted without interrupting the continuity of the chain; this avoids having to construct a housing body which satisfies certain strength criteria associated with the structural integrity of the chain itself.

Moreover, the device may be manufactured in an extremely low-cost manner, potentially using only three articles: a housing body, an elastic cord and a hook.

The possibility of manufacturing the housing body by means of an extrusion process allows a single article to be kept in store for all the chain sizes and for all the embodiments desired, said article being then cut to the length required in each case.

Therefore, the snow chain according to the invention is, overall, extremely simple to use and low-cost.

It is understood, however, that the invention is not limited to the particular embodiment illustrated above, this embodiment constituting only a non-limiting example of the scope of the invention, but that numerous variations are possible, all within the reach of a person skilled in the art, without thereby departing from the scope of the said invention.

For example, the external form of the housing body, shown as having a section profile in the form of an "8", may have any shape, also in order to satisfy requirements relating to an aesthetically pleasing appearance, independently of its utility and technical efficiency.

Moreover, the channel of the coupling body, inside which the chain is inserted, must not necessarily have a cross-shaped section, but may have a section considered in each case most appropriate for the specific application by the person skilled in the art.

Finally, it must be pointed out that the self-tensioning device has been illustrated mounted on a chain section, astride of a transverse portion (Figs. 6 and 7), However, it could also be mounted on a longer chain section or inserted between two transverse chain sections without straddling either of them.

## Claims

1. Tensioning device for snow chains, comprising at least a housing body to which an elastic recall element is fixed, the latter being able to tension a free chain section, **characterized in that** said housing body has a channel containing said elastic element and a coupling body which can be engaged with a continuous portion of said snow chain.

2. Tensioning device according to Claim 1, in which said coupling body has an engaging channel inside which said continuous chain portion is inserteable.

3. Tensioning device according to Claim 2, in which said engaging channel has a cross-shaped section inside which the perpendicular links of said chain can be inserted.

4. Tensioning device according to Claim 2 or Claim 3, in which said coupling body has at least one notch able to interrupt the continuity thereof and expose the chain inserted inside the engaging channel.

5. Tensioning device according to Claim 1, in which said housing body is obtained by means of extrusion and cut to the desired length.

6. Tensioning device according to Claim 5, in which said containing channel has, at a rear end, a recess for receiving and retaining an enlarged end of said elastic element and, at a front end, a chamfer formed at an angle of about 45°.

7. Tensioning device according to any one of the preceding claims, in which said housing body is divided into two short portions attached to two adjacent sections of the same chain.

8. Tensioning device according to any one of the preceding claims, in which said elastic element is a rubber cord.

9. Snow chain for tyres, comprising a self-tensioning device, in which a free chain section passes inside a non-return block and is fastened to a tensioning device,
**characterized in that** said tensioning device is according to any one of the preceding claims.

10. Snow chain for tyres according to Claim 9, in which said tensioning device is coupled to the chain in a position opposite said non-return block.
